Europäisches Patentamt

**European Patent Office**

Office européen des brevets

(11) Veröffentlichungsnummer: **0 152 123**
A2

(12) ## EUROPÄISCHE PATENTANMELDUNG

(21) Anmeldenummer: 85200016.5

(22) Anmeldetag: **10.01.85**

(51) Int. Cl.⁴: **E 04 F 21/00**
**E 06 B 7/23**

(30) Priorität: **10.01.84 DE 8400766 U**

(43) Veröffentlichungstag der Anmeldung:
**21.08.85 Patentblatt 85/34**

(84) Benannte Vertragsstaaten:
**AT BE CH DE FR GB IT LI NL SE**

(71) Anmelder: **Konings Machinefabriek B.V.**
**Postbus 9004**
**NL-6070 AA Swalmen(NL)**

(72) Erfinder: **Gruber, Kurt, Dr.**
**Heideweg 10**
**München-Gladbach(DE)**

(74) Vertreter: **van der Arend, Adrianus G.A., Ir. et al,**
**EXTERPATENT Willem Witsenplein 4**
**NL-2596 BK 's-Gravenhage(NL)**

(54) **Vorrichtung zum kontinuierlichen Einbringen eines Fusses eines länglichen elastischen Streifens in einen Aufnahmeraum.**

(57) Vorrichtung zum kontinuierlichen Einbringen eines profilierten Fusses eines länglichen elastischen Streifens in einen Aufnahmeraum worin der Fuss des Streifens festgehalten wird, mittels eines rotierenden Organs, und mit eine Zufuhr- und Positionierungseinrichtung (23) für den Streifen deren Innenkontur wenigstens in ihrem dem rotierenden Organ zugewandten Endbereich im wesentlichen der Aussenkontur des Streifens (3) entspricht und welche schräg zur Längsrichtung des Aufnahmeraumes (2) angeordnet ist.

Fig. 4 B.

EP 0 152 123 A2

Vorrichtung zum kontinuierlichen Einbringen eines
Fusses eines länglichen elastischen Streifens in
einen Aufnahmeraum

Die Erfindung betrifft eine Vorrichtung zum kontinuierlichen Einbringen eines profilierten Fusses eines
länglichen elastischen Streifens in einen Aufnahmeraum mit einem solchen Querschnitt, dass der Fuss des
Streifens in diesem form- und/oder kraftschlüssig
festgehalten wird, bei der der elastische Streifen
mittels eines rotierenden Organs in den Aufnahmeraum
gedrückt wird.

Im Fenster-, Türen- und Rahmenbau sowie für viele
andere Anwendungen werden sehr viele verschiedenartige elastische Profilstreifen verwendet, beispielsweise zum Abdichten. Die Profilstreifen werden in dafür vorgesehene Aufnahmeräume in den Bauelementen
eingebracht, und zwar derart, dass die Profilstreifen
mit einem profilierten Fuss in den Aufnahmeraum eingreifen. Der profilierte Fuss des Streifens einerseits
und der Aufnahmeraum andererseits haben eine solche
Gestalt, dass der Streifen ggf. unter Vorspannung in
den Aufnahmeraum eingebettet wird und dann auch eingebettet bleibt.

Es ist bekannt, den profilierten Fuss derartiger elastischer Streifen unter Einsatz eines stabförmigen
Andruckmittels oder mittels eines rotierenden Organs, beispielsweise einer walzenförmig ausgebildeten Druckrolle einzubringen. Diese Tätigkeit ist sehr zeitaufwendig. Ausserdem ergibt sich der Nachteil, dass bei dieser Arbeitsweise der elastische Streifen bei dem Eindrücken ein wenig ausgedehnt wird. Dies hat zur Folge, dass der Streifen nach dem Einbringen unter dem Einfluss der Vorspannung zusammenschrumpft und dann den Aufnahmeraum in dessen Längsrichtung nicht mehr völlig ausfüllt.

Der vorliegenden Erfindung liegt die Aufgabe zugrunde, eine Vorrichtung der eingangs genannten Art dahingehend zu schaffen, dass elastische Streifen mit praktisch beliebiger Profilform des Fusses während einer Durchlaufbewegung in den Aufnahmeraum eingebracht werden können.

Zur Lösung dieser Aufgabe ist erfindungsgemäss vorgesehen, dass eine Zufuhr- und Positioniereinrichtung für den Streifen vorgesehen ist, deren Innenkontur wenigstens in ihrem dem rotierenden Organ zugewandten Endbereich im wesentlichen der Aussenkontur des Streifens entspricht und welche schräg zur Längsrichtung des Aufnahemraumes angeordnet ist, und die Innenkontur der Zufuhr- und Positioniereinrichtung an ihrem Ausgangsende gegenüber dem Aufnahmeraum um eine Längsachse verdreht angeordnet ist. Hierbei ist von Vorteil, dass der von dem rotierenden Organ transportierte und in den Aufnahmeraum gedrückte Streifen durch die Zufuhr schräg in Richtung auf den Aufnahmeraum und die Winkelverdrehung um eine Längsachse derart "schräg" in den Aufnahmeraum gelangt, dass der profilierte Fuss wenigstens an einer Seite der entsprechenden Seite des Aufnahmeraumes zugeführt wird. Die Winkelverdrehung um eine Längsachse hängt dabei von der jeweiligen Form des profilierten Fusses und der Form des Aufnahmeraumes ab. Durch den anschliessenden Andrückvorgang des rotierenden Organs rastet dann die bisher noch ausserhalb des Aufnahmeraums liegende Seite des profilierten Fusses leicht in den entsprechenden Bereich des Aufnahmeraumes ein.

Die Einstellung bzw. Verstellung der Winkelverdrehung kann grundsätzlich auf beliebige Weise erfolgen. Nach einem bevorzugten Merkmal kann vorgesehen sein, dass die Zufuhr- und Positioniereinrichtung an ihrem dem Aufnahmeraum zugewandten Ende einen auswechselbaren Positionierkopf aufweist. Zur Umstellung auf eine andere Profilform ist es dann lediglich erforderlich, den Positionierkopf auszutauschen. Die Positionierköpfe sind in ihrer Innenkontur der jeweiligen Aussenkontur des Streifens angepasst und in Längsrichtung ihrer Durchgangsöffnung um einen solchen Winkel verdreht, der optimal auf die jeweilige Gestaltung des profilierten Fusses und des Aufnahmeraumes abgestimmt ist. Die den Positionierkopf tragende Zufuhreinrichtung ist dann für die unterschiedlichsten Profilarten ohne Aenderung einsetzbar.

Nach weiteren Merkmalen der Erfindung kann das rotierende Organ beispielsweise als Rolle oder auch als über Rollen geführtes Band ausgebildet sein.

Gemäss einer bevorzugten Ausführungsform ist vorgesehen, dass das rotierende Organ an einem schwenkbar gelagerten Hebel angelenkt ist, der gleichzeitig die Zufuhr- und Positioniereinrichtung trägt. Der Hebel übt dabei in Richtung auf den Aufnahmeraum eine Kraft aus. Diese Kraft kann beispielsweise die Gewichtskraft oder in bevorzugter Weise eine durch eine Zugfeder ausgeübte Kraft sein.

Schliesslich sieht die Erfindung vor, dass dem rotierenden Organ eine derart wirkende Antriebseinrichtung zugeordnet ist, dass dessen Umfangsgeschwindigkeit im Kontaktpunkt mit dem Streifen mindestens ebenso hoch ist wie die Relativgeschwindigkeit des rotierenden Organs in Längsrichtung des Aufnahmeraumes. Dadurch wird der elastische Streifen entweder ohne Spannung oder unter Druckspannung in den Aufnahmeraum eingebracht. Beides hat zur Folge, dass kein sog. Nachschrumpfen mehr auftritt.

Die Erfindung wird nachfolgend anhand der Zeichnungen näher erläutert. Es zeigen:

Fig. 1A bzw. 1B im Querschnitt ein Element mit Aufnahmeraum für einen länglichen elastischen Streifen in leerem bzw. gefülltem Zustand;

Fig. 2 schematisch eine Ausführungsform der Vorrichtung gemäss der Erfindung in Seitenansicht;

Fig. 3A einen Querschnitt der Positioniereinrichtung mit dem profilierten Streifen;

Fig. 3B einen Ansicht des auswechselbaren Positionierkopfes.

Fig. 4A, 4B bzw. 4C die Lage des Streifens relativ zu dem Aufnahmeraum in der Positioniereinrichtung (Fig. 4A), vor dem Eindrücken nach dem Verlassen der Positioniereinrichtung (Fig. 4B) und in eingebrachtem Zustand (Fig. 4C);

Fig. 5 eine Seitenansicht einer anderen Ausführungsform der Vorrichtung.

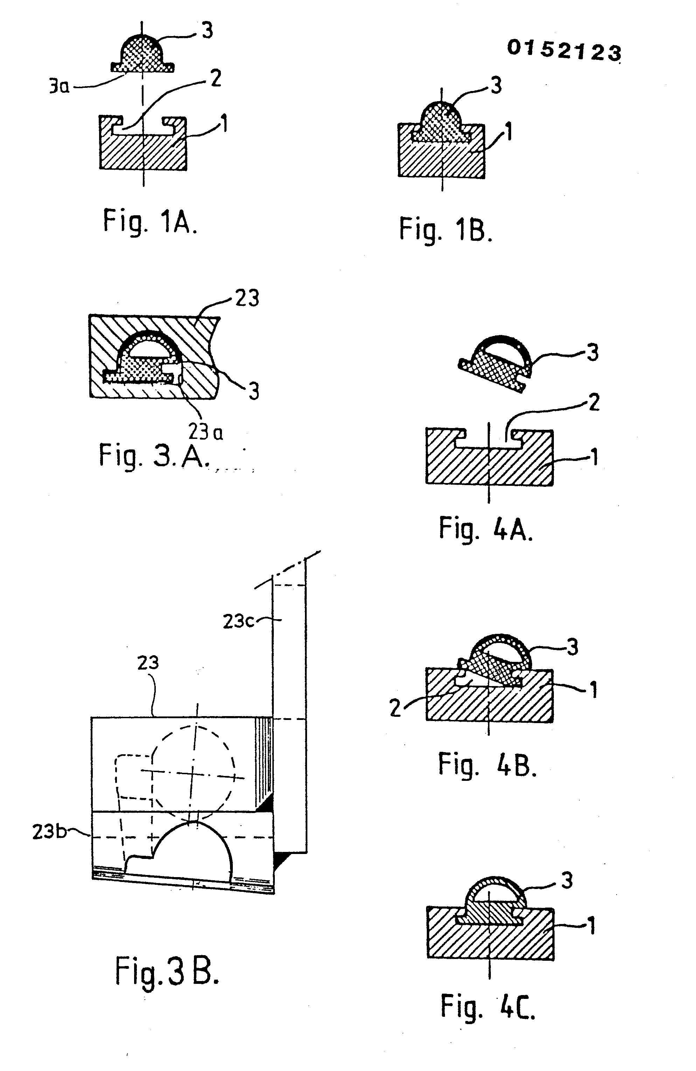

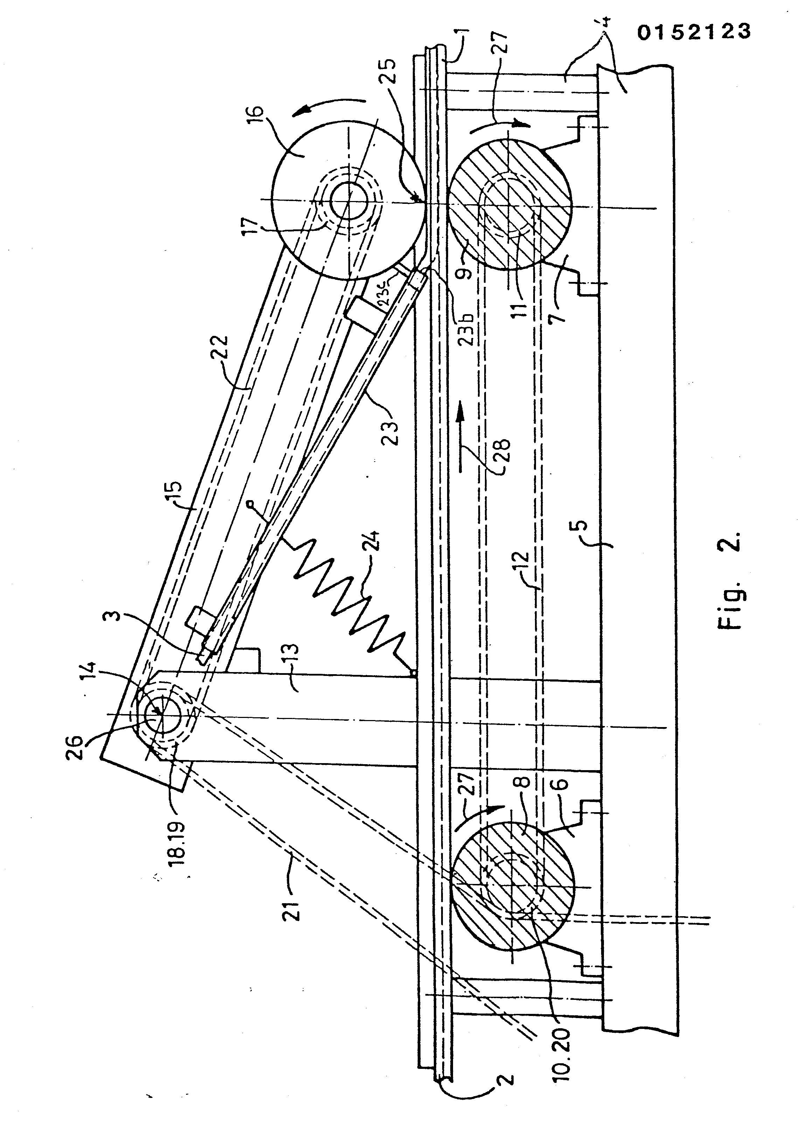

Fig. 1A zeigt einen Teil eines Elementes 1, welches beispielsweise Teil eines Fensterrahmens einer Türe, eines Anschlagprofils od. dgl. ist und einen länglichen Aufnahmeraum 2 für die Aufnahme eines Profilfusses 3a eines elastischen profilierten Streifens 3 aufweist.

Fig. 1B zeigt die gleichen Elemente, wobei jetzt jedoch der Profilstreifen 3 mit seinem Profilfuss 3a in den Aufnahmeraum 2 eingebracht ist: es ist ersichtlich, dass der Profilstreifen 3 in dem Aufnahmeraum 2 festgehalten wird.

Die in Fig. 2 und 3 dargestellte Vorrichtung weist einen insgesamt mit 4 bezeichneten Rahmen mit Rahmenbalken 5 auf, die in Lagern 6 und 7 gelagerte Tragerollen 8, 9 tragen. Die drehbaren Tragerollen 8 bzw. 9 sind jeweils von gleichem Durchmesser und über Kettenräder 10 bzw. 11 gleichen Durchmessers und eine darüber geführte Kette 12 miteinander verbunden; die Rollen drehen sich also mit gleicher Umfangsgeschwindigkeit. Der Rahmenbalken 5 trägt einen Ständer 13, an dem über einen Drehpunkt 14 ein Hebel 15 befestigt ist, an dessen freiem Ende eine drehbare Druckrolle 16 mit einem Kettenrad 17 angebracht ist.

Auf einer im Drehpunkt 14 frei gelagerten Welle 26 sind zwei fest miteinander verbundene, hintereinander liegende Kettenräder 18, 19 montiert. Auf der Welle der Rolle 8 ist ein hinter einem Kettenrad 10 liegendes Kettenrad 20 angebracht. Eine von einem nicht dargestellten Antriebsmotor angetriebene Kette 21 umschlingt die Kettenräder 19, 20 während die Kettenräder 18, 17 über eine Kette 22 verbunden sind.

Somit haben die Tragerollen 8, 9 die gleiche Winkelgeschwindigkeit, während die Winkelgeschwindigkeit der Druckrolle 16 durch die Verhältnisse der Kettenräder 17, 28 und 20 bestimmt wird. Das Verhältnis der Umfangsgeschwindigkeit der Rollen 8, 9 einerseits und 16 andererseits ist daher abhängig von diesen Verhältnissen und den Durchmessern der Rollen 8, 9 einerseits und 16 andererseits.

Die Rollen 8, 9 nehmen das Element 1 mit dem Aufnahmeraum 2 auf. Das Element 1 ist über hier nicht dargestellte Einrichtungen seitlich geführt. Der elastische Profilstreifen 3 wird von einer (nicht dargestellten) Vorratseinrichtung aus durch die Zufuhr- und Positioniereinrichtung 23 dem Aufnahmeraum 2 zugeführt. Die Zufuhr- und Positioniereinrichtung 23 entspricht wenigstens in ihrem der Rolle 16 zugewandten Endbereich im wesentlichen der Aussenkontur des Streifens, wie aus Fig. 3 ersichtlich. In dieser Figur ist die Innenkontur der Positioniereinrichtung mit 23a bezeichnet. Dieser Endbereich der Zufuhr- und Positioniereinrichtung 23 wird zweckmässigerweise von einem auswechselbaren Positionierkopf gebildet, dargestellt in Fig. 3B und mittels die Strebe 23c befestigt. Dieser Positionierkopf
weist nicht nur eine im wesentlichen der Aussenkontur
des Streifens entsprechende Innenkontur auf, sondern
ist darüber hinaus so ausgebildet, dass die Innenkontur 23a an dem Ausgangsende des Positionierkopfes gegenüber dem Aufnahmeraum 2 - bzw. der Endposition des Streifens in dem Aufnahmeraum 2 - um eine Längsachse verdreht angeordnet ist. Dies ist schematisch in Fig. 4 angedeutet. Fig. 4a zeigt die Lage des Streifens 3 am Ausgangsende des Positionierkopfes, Fig. 4B zeigt, dass der entsprechend der zeichnerischen Darstellung rechte Teil des Profilfusses des Streifens 3 durch die schräge Anordnung und die Verdrehung um eine Längsachse in den entsprechend der Zeichnung rechten Randbereich des Ausnahmeraumes eingebracht ist, bevor der eigentliche Andrückvorgang erfolgt, und Fig. 4C zeigt die Lage des Streifens in eingedrücktem Zustand. Der letztgenannte Zustand wird dadurch erreicht, dass die unter Wirkung einer Zugfeder 24 stehende Druckrolle 16 die entsprechend Fig. 4B noch ausserhalb des Aufnahmeraumes befindliche Flanke des Profilfusses in den Aufnahmeraum 2 eindrückt. Die Feder 24 ist zwischen dem Ständer 13 und dem Hebel 15 angeordnet.

Der Druckpunkt zwischen der Rolle 16 und dem elastischen Streifen 3 trägt die Bezugsziffer 25. Wenn die Umfangsgeschwindigkeit dieses Punktes 25 während der Rotation der Rollen 8, 9 in Pfeilrichtung 27 gleich der Geschwindigkeit oder höher ist als die Geschwindigkeit des Elementes 1 in Pfeilrichtung 28, wenn also die Umfangsgeschwindigkeit der Rolle 9 niedriger als die Umfangsgeschwindigkeit oder gleich der Umfangsgeschwindigkeit der Rolle 16 ist, dann wird der elastische Profilstreifen 3 entweder ohne innere Spannung oder mit inneren Druckspannung in den Aufnahmeraum 2 eingebracht. Dadurch kann ein Nachschrumpfen nicht mehr auftreten.

Die Figuren zeigen nur eine schematische Darstellung der Vorrichtung, wobei für die endgültige Realisierung viele Varianten möglich sind. Insbesondere kann statt der gemäss Fig. 2 vorgesehenen Kettenräder eine variabele Uebersetzung verwendet werden, so dass in Kombination mit einer einstellbaren Kraft der Feder 24 durch eine geeignete Abstimmung zwischen den verschiedenen Geschwindigkeiten und der Druckkraft bei den verschiedensten Profilformen der gewünschte Effekt erreicht werden kann.

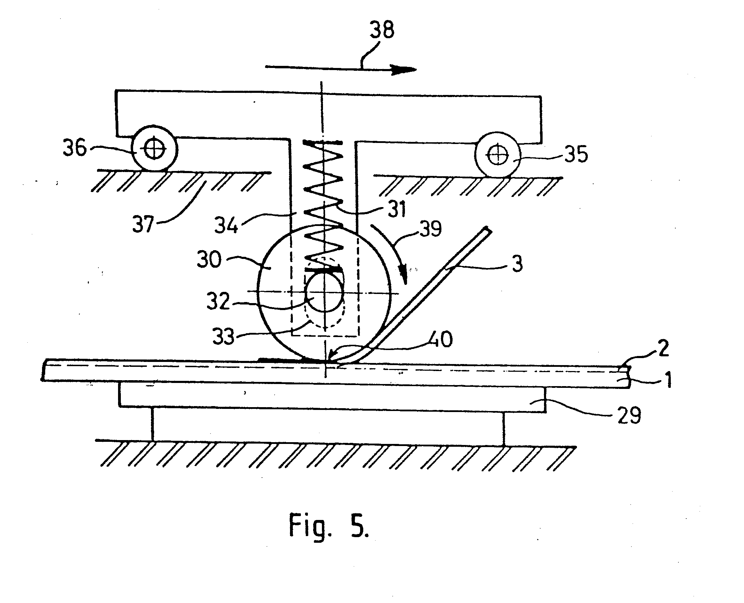

Fig. 5 ist eine schematische Seitenansicht einer weiteren Ausführungsform der Erfindung. Bei dieser Ausführungsform ist das Element, welches den Profilstreifen aufnehmen soll, stillstehend angeordnet, und die hier mit 30 bezeichnete Druckrolle wird in Längsrichtung des Pfeiles 38 bewegt. Bei dieser Anordnung ruht das zur Aufnahme des Profilstreifens 3 mit einem Aufnahmeraum 2 versehene Element auf einer geeigneten Unterstützung 29. Das Einbringen geschieht mit Hilfe einer Druckrolle 30, die unter Einfluss einer durch eine Druckfeder 31 bestimmten Vorspannung in senkrechter Richtung in einer geeigneten Führung drehbar angeordnet ist. Hierzu ist eine Welle 32 vorgesehen, die in einem Führungsschlitz 33 in einem Gestell 34 bewegbar angeordnet ist. Das Gestell 34 ruht mittels Rollen 35 und 36 auf einer geeigneten Unterstützung 37 und kann mittels eines nicht dargestellten Antriebes in Pfeilrichtung 39 angetrieben werden. Die Welle 32 wird in Pfeilrichtung 39 mit einer solchen Geschwindigkeit angetrieben, dass die Geschwindigkeit, mit der sich der hier mit 40 bezeichnete Druckpunkt zwischen der Rolle 30 und dem Streifen 3 in Pfeilrichtung 38 bewegt, kleiner ist oder gleich gross ist, wie die Umfangsgeschwindigkeit der Rolle 30. Auch hier ist eine (nicht dargestellte) Zufuhr- und Positioniereinrichtung entsprechend der Erfindung vorgesehen.

Vorrichtung zum kontinuierlichen Einbringen eines
Fusses eines länglichen elastischen Streifens in
einen Aufnahmeraum

Schutzansprüche

1. Vorrichtung zum kontinuierlichen Einbringen eines profilierten Fusses eines länglichen elastischen Streifens in einen Aufnahmeraum mit einem solchen Querschnitt, dass der Fuss des Streifens in diesem form- und/oder kraftschlüssig festgehalten wird, bei der der elastische Streifen mittels eines rotierenden Organs in den Aufnahmeraum gedrückt wird, dadurch gekennzeichnet, dass eine Zufuhr- und Positionierungseinrichtung (23) für den Streifen vorgesehen ist, deren Innenkontur wenigstens in ihrem dem rotierenden Organ zugewandten Endbereich im wesentlichen der Aussenkontur des Streifens (3) entspricht und welche schräg zur Längsrichtung des Aufnahmeraumes (2) angeordnet ist und die Innenkontur (23a) der Zufuhr- und Positionierungseinrichtung (23) an ihrem Ausgangsende (23b) gegenüber dem Aufnahmeraum (2) um eine Längsachse verdreht angeordnet ist.

2. Vorrichtung nach Anspruch 1, dadurch gekennzeichnet, dass die Zufuhr- und Positioniereinrichtung (23) an ihrem dem Aufnahmeraum (2) zugewandten Ende (23b) einen auswechselbaren Positionierkopf aufweist.

3. Vorrichtung nach Anspruch 1 oder 2, dadurch gekennzeichnet, dass das rotierende Organ als Rolle (16, 30) ausgebildet ist.

4. Vorrichtung nach Anspruch 1 oder 2, dadurch gekennzeichnet, dass das rotierende Organ als Band ausgebildet ist.

5. Vorrichtung nach einem der Ansprüche 1 bis 4, dadurch gekennzeichnet, dass das rotierende Organ (16) an einem schwenkbar gelagerten Hebel (15) angelenkt ist, der gleichzeitig die Zufuhr- und Positioniereinrichtung (23) trägt, und der Hebel (15) in Richtung auf den Aufnahmeraum (2) eine Kraft ausübt.

6. Vorrichtung nach einem der Ansprüche 1 bis 5, dadurch gekennzeichnet, dass dem rotierenden Organ (16, 30) eine derart wirkende Antriebseinrichtung (18, 19, 21, 22, 17 bzw. 39) zugeordnet ist, dass dessen Umfangsgeschwindigkeit im Kontaktpunkt (35, 40) mit dem Streifen (3) mindestens ebenso hoch ist wie die Relativgeschwindigkeit des rotierenden Organs (16, 30) in Längsrichtung (28, 38) des Aufnahmeraumes (2).

Fig. 1A.

Fig. 1B.

Fig. 3.A.

Fig. 4A.

Fig. 3B.

Fig. 4B.

Fig. 4C.

Fig. 2.

Fig. 5.